# EUROPÄISCHE PATENTSCHRIFT

(11) **EP 1 379 742 B1**
(45) Veröffentlichungstag und Bekanntmachung des Hinweises auf die Patenterteilung: **21.06.2006**
(21) Anmeldenummer: 01986913.0
(22) Anmeldetag: 20.12.2001
(51) Int. Cl.: E04H 1/12, F21V 8/00, G09F 13/18

(54) **URBANES MÖBEL MIT BELEUCHTETER GLASSCHEIBE**
PUBLIC OUTDOOR FURNISHINGS COMPRISING AN ILLUMINATED GLASS PANE
MEUBLE URBAIN PRESENTANT UNE VITRE ECLAIREE

(30) Priorität: 06.04.2001 DE 10117203
(43) Veröffentlichungstag der Anmeldung: 14.01.2004
(73) Patentinhaber: Koninklijke Philips Electronics N.V., 5621 BA Eindhoven (NL)
(72) Erfinder: Thomas Emde, 60389 Frankfurt/Main (DE); Heinrich Robert Pohl, 50769 Köln (DE)
(74) Vertreter: Fritz, Edmund Lothar
(86) Internationale Anmeldenummer: PCT/EP2001/015104
(87) Internationale Veröffentlichungsnummer: WO 2002/081844

(56) Entgegenhaltungen:
- EP-A- 0 878 720
- DE-U- 29 717 337
- FR-A- 2 715 714
- US-A- 5 786 665

## Beschreibung

Die vorliegende Erfindung betrifft ein urbanes Möbel, umfassend wenigstens ein Fensterelement mit einer Rahmenkonstruktion, die wenigstens eine Glasscheibe einfasst sowie eine Beleuchtungseinrichtung mit wenigstens einem Leuchtmittel.

Aus der DE 93 15 434.8 U1 ist ein urbanes Möbel, nämlich ein Wartehäuschen für Haltestellen von öffentlichen Verkehrsmitteln der eingangs genannten Art bekannt. Als Beleuchtungseinrichtung für den Innenraum des Wartehäuschens dienen hier Leuchtstofflampen, die beispielsweise an der Rückwand des Wartehäuschens angebracht sind. Außerdem sind noch im Bereich von Seitenwänden des Wartehäuschens Vitrinen vorgesehen, innerhalb derer sich ebenfalls Lichtquellen befinden, die eine Glasscheibe oder dergleichen, die auch als Werbe- oder Informationsträger dient, hinterleuchten. Es ist bei diesem bekannten Wartehäuschen nicht vorgesehen, das Licht unmittelbar stirnseitig in eine Glasscheibe einzuleiten und diese quasi als Lichtleiter zu verwenden.

Aus der DE 195 29 737 C1 ist ein Fensterelement bekannt geworden. Bei diesem bekannten Fensterelement sind zwei äußere voneinander beabstandete Glasscheiben vorgesehen, die von einer Rahmenkonstruktion eingefasst werden. Außerdem sind in Reihen angeordnete vergleichsweise kleine Lampen als Leuchtmittel vorhanden, die von der Stirnseite her Licht abgeben, welches dann im wesentlichen rechtwinklig umgelenkt wird, so dass es überwiegend etwa senkrecht zur Einstrahlrichtung durch die äußere Glasscheibe hindurchtritt, um beispielsweise den Innenraum eines Gebäudes zu beleuchten. Um die Umlenkung des Lichts zu bewirken ist bei diesem bekannten Fensterelement zusätzlich eine gewölbte Glasscheibe vorgesehen, die im Innenraum zwischen den beiden äußeren Glasscheiben angeordnet ist und eine der gewünschten Lichteinstrahlrichtung zugewandte konvex gewölbte Fläche aufweist. Das von den Leuchtmitteln von der Stirnseite her eingestrahlte Licht wird an dieser gewölbten Scheibe reflektiert und dadurch in den Innenraum abgestrahlt. Ohne diese gewölbte Scheibe ist das vorbekannte Fensterelement für den gewünschten Anwendungszweck der Erhellung beispielsweise des Innenraums eines Gebäudes nicht einsetzbar. Dies hat in der Praxis den Nachteil, dass man in jedem Fall ein vorhandenes Fenster oder ein Fensterelement gegen das Fensterelement mit der gewölbten Scheibe vollständig austauschen muss. Das Nachrüsten eines vorhandenen lsolierglasfensters wäre jedenfalls sehr aufwendig, da zunächst eine der äußeren Glasscheiben ausgebaut werden müsste. Ein solches Nachrüsten wäre auch nur dann möglich, wenn das vorhandene herkömmliche Isolierglas über Einrichtungen und ausreichenden Platz für den Einbau einer solchen gewölbten Glasscheibe in den Innenraum verfügt. Außerdem ist bei der Verwendung dieser gewölbten Glasscheiben sehr nachteilig, dass für jede Scheibengröße entsprechend gewölbte Scheiben hergestellt bzw. bevorratet werden müssen. Da bekanntlich am Bau viele unterschiedliche Dimensionen für Scheiben gebraucht werden, ist dies sehr kostenaufwendig. Ohnehin ist die Herstellung gewölbter Scheiben wesentlich aufwendiger als bei ebenen Scheiben.

Aus der EP 0 324 710 A 1 ist ein Fensterelement bekannt geworden, welches eine Isolierglasscheibe mit zwei Glasscheiben umfasst sowie ein Leuchtmittel in Form einer Leuchtstoffröhre, zwischen den beiden Glasscheiben, welche von der Rahmenkonstruktion aus Licht in den Zwischenraum parallel zu den Glasscheiben einstrahlt. Dieses Licht wird jedoch in eine Zwischenscheibe eingeleitet, um in diese Zwischenscheibe eingearbeitete Schriftzeichen zu erleuchten. Bei diesem bekannten Fensterelement geht es in erster Linie darum, den Zwischenraum, d. h., das Innere der Isolierglasscheibe zu erleuchten, um das Fenster beispielsweise zu Reklamezwecken nach Art eines Leuchtschildes zu verwenden. Durch die verwendete Zwischenscheibe ist die Lichtausbeute bezügllch des von dem Fensterelement in einen Raum hinein abgestrahlten Lichts nicht optimal. Die Rahmenkonstruktion des Fensterelements ist außerdem so ausgebildet, dass eine Leuchtstoffröhre als Leuchtmittel zu verwenden ist. Derartige Leuchtstoffröhren haben einen relativ hohen Energieverbrauch. Außerdem ist bei diesem bekannten Fensterelement vorgesehen, die Oberfläche der Zwischenscheibe anzufräsen, so dass nur dieser angefräste Bereich aufleuchtet, um so beispielsweise eine bestimmte Lichtwerbung zu erzeugen. Dies erfordert einen zusätzlichen Arbeitsgang und auch die Verwendung der Zwischenscheibe als solcher macht das Fensterelement kostenaufwendiger.

FR-A1-2 715 714 offenbart ein urbanes Möbel gemäss dem Oberbegriff des Anspruchs 1.

Die Aufgabe der vorliegenden Erfindung besteht darin, ein urbanes Möbel zu schaffen, bei dem Fensterelemente verwendet werden, die konstruktiv relativ einfach aufgebaut sind, weitgehend analog zu einem herkömmlichen Fenster und die eine Ausleuchtung des urbanen Möbels mit einer relativ hohen Lichtausbeute bei vergleichsweise niedrigem Energieverbrauch ermöglichen. Die Lösung dieser Aufgabe liefert ein erfindungsgemäßes urbanes Möbel der eingangs genannten Gattung mit den kennzeichnenden Merkmalen des Hauptanspruchs.

Ein solches urbanes Möbel gemäß der Erfindung hat den Vorteil, dass keine Isolierglasscheiben mit zusätzlichen Scheiben oder sonstigen Bauteilen verwendet werden müssen. Bereits deshalb ist die Herstellung eines solchen Fensterelements mit wesentlich geringerem Aufwand möglich. Die Ablenkung des Lichts wird statt dessen dadurch erreicht, dass eine Glasscheibe z. B. aus Verbundglas oder einfachem Glas lichtstreuend ausgebildet wird, so dass das von der Stirnseite her durch das Leuchtmittel in das Glas eingestrahlte Licht etwa 90° umgelenkt wird und entweder in die eine oder die andere Richtung oder nach beiden Seiten über die Fläche der Scheiben abgestrahlt wird z. B. in einen Innenraum oder aber auch durch die Glasscheibe in die entgegengesetzte Richtung, z. B. in einen Außenraum abgestrahlt wird.

Diese lichtumlenkende Wirkung durch Lichtstreuung wird erreicht, dadurch, dass wenigstens eine der Glasscheiben wenigstens einseitig bedruckt, gesandstrahlt, geätzt, beschichtet, graviert oder beklebt ist. Dieses Bedrucken, Sandstrahlen, Ätzen, Beschichten, Gravieren, Bekleben erfolgt dabei vorzugsweise in einem Punktraster, Strichraster oder einem ähnlichen Rastermuster. Das Bedrucken kann beispielsweise im Siebdruck erfolgen. Das Sandstrahlen kann man beispielsweise dadurch vornehmen, dass man sehr feinen Sand durch ein entsprechend dem gewünschten Rastermuster geformtes Sieb strahlt. Das Gravieren kann beispielsweise durch ein Nadelsystem entsprechend dem gewünschten Punktraster erfolgen. Wenn man die Methode des Beklebens wählt, können in der Regel sehr kleine Partikel vorzugsweise einseitig in dem gewünschten Rastermuster auf die Glasscheibe geklebt werden, wobei auch dies vorzugsweise maschinell erfolgt, um eine rationelle Fertigung zu ermöglichen. In der Regel sind die Ätzpunkte, Druckpunkte usw. oder Striche des Rastermusters jeweils sehr klein und in entsprechend großer Anzahl vorhanden, wobei sie so klein sein sollten, dass der Lichtdurchfall durch die Glasscheibe nur minimal behindert wird. Vorzugsweise sind die Punkte, Striche oder dergleichen des Rastermusters so verteilt, dass sie vom Randbereich zur Mitte der Glasscheibe hin in der Dichte zunehmen.

Die lichtstreuende Wirkung kann man auch dadurch erreichen, dass man im Inneren der Scheiben eine Fehlstruktur erzeugt, z. B., indem man diese mit gezielt auf innerhalb der Scheibe liegende Bereiche fokussierten Laserstrahlen bearbeitet.

Als Leuchtmittel wird für das erfindungsgemäße Fensterelement vorzugsweise eine Anzahl von LED's, SMD's, andere Leuchtdioden oder ähnliche Leuchtmittel verwendet, die einen sehr geringen Energiebedarf haben. Leuchtmittel wie LED's, SMD's haben dabei den Vorteil, dass sie sich in einer Anzahl beispielsweise einer Reihe auf einem Streifen unterbringen lassen, der auch die Leiterbahnen für die Versorgung der Leuchtmittel aufweist, und dass sich ein solcher Streifen mit den Leuchtmitteln so dimensionieren lässt, dass er in seiner Breite problemlos an die Breite von Glasscheiben z. B. eines typischen Verbundglasfensters angepasst ist. Die Leuchtmittel werden stirnseitig im Rahmenbereich der Fensterelemente untergebracht. Dabei kann die Unterbringung der Leuchtmittel beispielsweise in einer stirnseitigen Nut im Rahmen des Fensterelements so gewählt sein, dass man bei Betrachtung des Fensterelements von innen oder außen her die Leuchtmittel nicht oder kaum sieht. Die Rasterpunkte, Striche oder dergleichen des Rastermusters auf der Glasscheibe, die die lichtstreuende Wirkung haben, sind ebenfalls in der Regel so klein, dass sie von dem Betrachter kaum wahrgenommen werden. Eine Glasscheibe eines erfindungsgemäßen Fensterelements sieht beispielsweise ähnlich aus wie eine Glasscheibe mit Sonnenschutz, wobei tagsüber, wenn die Leuchtmittel nicht an sind, eine nahezu ungehinderte Sicht durch die Glasscheibe des Fensterelements möglich ist. Mit anderen Worten ein Fensterelement gemäß der Erfindung unterscheidet sich optisch für den Betrachter praktisch nicht von einem herkömmlichen Fensterelement, hat gegenüber diesem aber den wesentlichen Vorteil der zusätzlichen Beleuchtungsfunktion.

Die im Rahmen der vorliegenden Erfindung als Fensterelemente bezeichneten Teile der urbanen Möbel können ganz unterschiedliche Dimensionen aufweisen, je nach Art und Bauform des urbanen Möbels. Weist dieses relativ große Flächen auf, wie z. B. bei einem Wartehäuschen für eine Bus- oder Straßenbahnhaltestelle, dann können großflächige Fensterelemente verwendet werden, die sich beispielsweise über die gesamte Fläche einer Seite eines solchen urbanen Möbels erstrecken können. Zur besseren Handhabung kann es aber auch sinnvoll sein, solche Flächen aus mehreren solcher Fensterelemente aufzubauen. Im allgemeinen bietet es sich an, z. B. bei einem solchen Wartehäuschen mit Längs- und mit Querseiten, die beispielsweise im rechten Winkel aufeinanderstoßen, für jede Seite ein Fensterelement zu verwenden.

Handelt es sich dagegen gemäß einer alternativen Variante der Erfindung beispielsweise um eine Parkbank, kann man kleinere Fensterelemente verwenden, die angepasst sind an die entsprechende Form des jeweiligen urbanen Möbels. Wenn hierin davon die Rede ist, dass die Fensterelemente Glasscheiben umfassen, so kann dies Echtglas oder Kunststoffglas sein. Man kann einfache Glas- oder Kunststoffscheiben verwenden oder auch solche aus Verbundglas. Es kann sinnvoll sein, wenn die Lichtabgabe des Streulichts über die Fläche der Glasscheiben nach beiden Richtungen hin erfolgt, beispielsweise bei einem Wartehäuschen der vorgenannten Art, um dieses einerseits nach außen hin sichtbar zu machen und andererseits eine Beleuchtung für die in dem Wartehäuschen befindlichen Personen zu schaffen. Dabei kann man verschiedene Leuchtmittelgruppen verwenden und es bietet sich an, bei der Verwendung von Verbundglas Licht über unterschiedliche Leuchtmittelgruppen in eine außenliegende Scheibe bzw. eine innenliegende Scheibe des Verbundglases einzuleiten, so dass man diese Leuchtmittel unabhängig voneinander schalten bzw. steuern kann. Man kann dabei auch z. B. zur einen Seite hin farbiges Licht und zur anderen Seite hin weißes Licht abstrahlen oder verschieden farbiges Licht. Bei der Verwendung von Verbundglas kann dieses auch aus mehr als zwei Glasscheiben bestehen.

Dann kann man beispielsweise die beiden jeweils äußeren Glasscheiben jeweils wenigstens einseitig lichtstreuend ausbilden. Dabei kann man einer bevorzugten Weiterbildung der Erfindung folgend eine erste Anzahl Leuchtmittel und eine zweite Anzahl Leuchtmittel vorsehen. Dadurch lässt sich gemäß einer bevorzugten Variante der Erfindung auch erreichen, dass die erste Anzahl Leuchtmittel von dem Fensterelement aus gesehen Licht in die eine Richtung, beispielsweise in den Innenraum hin abgibt und die zweite Anzahl Leuchtmittel von dem Fensterelement aus gesehen Licht in die entgegengesetzte Richtung abstrahlt, also beispielsweise in einen Außenraum. Vorzugsweise sind dann entsprechende Steuereinrichtungen vorhanden, die die Leuchtmittel entsprechend steuern, so dass die Abgabe des Lichts in die eine, bzw. andere Richtung unabhängig voneinander erfolgen kann.

Eine weitere bevorzugte Ausbildung der Erfindung sieht vor, dass man unterschiedlich farbige Leuchtmittel verwendet oder aber Leuchtmittel in Form von LED's, SMD's, OLED's oder dergleichen so steuert, dass diese farbiges Licht abgeben. Dies ist beispielsweise einfach dadurch möglich, dass man verschiedene Typen von LED's verwendet und diese dann so ansteuert, dass man Licht in der Lichtfarbe einzelner LED's erhält, die beispielsweise rot, grün oder blau sein können oder aber auch Licht in Mischfarben, wenn man beispielsweise rote LED's und blaue LED's oder rote LED's und grüne LED's usw. gleichzeitig ansteuert. Dies ermöglicht es beispielsweise auch bei einem erfindungsgemäßen Fensterelement gleichzeitig farbiges Licht nach außen abzugeben und weißes Licht nach innen abzugeben. Somit kann das urbane Möbel z. B. abends von außerhalb her farbig erscheinen, so dass man eine Effektbeleuchtung erhält und nach innen hin in den Innenraum des urbanen Möbels wird weißes Licht zur Beleuchtung abgegeben.

Ein weiterer Vorteil der Verwendung eines solchen Fensterelements liegt darin, dass, wenn man durch die Leuchtmittel eine Lichtstärke ausreichender Helligkeit erzeugt bei Dunkelheit auch die Einsicht durch das beleuchtete Fensterelement verhindert werden kann.

Im Rahmen der vorliegenden Erfindung ist die Verwendung von Glasscheiben aus Echtglas bevorzugt, da diese den Vorteil einer relativ kostengünstigen Herstellung haben, insbesondere da es sich um flache Glasscheiben handelt, die lediglich auf das erforderliche Maß zugeschnitten und in einem Arbeitsgang lichtstreuend ausgebildet werden müssen durch Bedrucken, Sandstrahlen, Ätzen, Beschichten, Gravieren, Bekleben etc. Grundsätzlich ist es aber auch möglich anstelle von Glasscheiben aus Echtglas solche aus Kunststoffglas zu verwenden. Aber auch bei dieser Variante wird das Licht immer von der Stirnseite her eingestrahlt.

Urbane Möbel im Sinne der vorliegenden Erfindung können zum einen Wartehäuschen beispielsweise für Bus- oder Straßenbahnhaltestellen sein oder auch Eingangsbereiche für U-Bahn- oder S-Bahn-Schächte. Die Anwendung der vorliegenden Erfindung ist aber nicht auf urbane Möbel der genannten Art beschränkt. Unter einem urbanen Möbel im Sinne der vorliegenden Erfindung wird allgemein ein Stadtraummöbel verstanden, das heißt die Erfindung umfasst beispielsweise auch Parkbänke und dergleichen. Ebenfalls von der vorliegenden Erfindung umfasst sind Schilder oder ähnliche Informationsträger, die im öffentlichen Bereich aufgestellt werden. Die Anwendung der Erfindung auf derartige Informationsträger ermöglicht es beispielsweise, diese farbig erscheinen zu lassen, indem man die verwendeten Leuchtmittel der Fensterelemente des urbanen Möbels entsprechend ansteuert. Eine solche farbige Ansteuerung, die durch die erfindungsgemäß verwendeten Leuchtmittel wie LEDs usw. variabel ist, hat den Vorteil, dass man eine bestimmte Farbe zu Erkennungszwecken wählen kann. Beispielsweise kann man dies bei Eingangsbereichen zu U-Bahn-oder S-Bahn-Schächten dazu nutzen, diese in der jeweiligen Farbe der U-Bahn- oder S-Bahn-Linie erscheinen zu lassen, wenn Sie abends beleuchtet sind. Dies hat den großen Vorteil, dass der Eingangsbereich zum U-Bahn- oder S-Bahn-Schacht nicht nur im Dunkeln besser aufgefunden wird, sondern dass den Personen auch durch die Farbe signalisiert wird, dass es sich um den Eingangsschacht zu einer bestimmten Bahnlinie handelt. Man kann die entsprechende farbliche Kennzeichnung wählen, wie dies in der Regel bei den U-Bahn- oder S-Bahn-Linien in den Plänen in großen Städten der Fall ist.

Eine weitere Möglichkeit besteht darin, die Leuchtmittel in den Fensterelementen des urbanen Möbels nicht ständig aufleuchten zu lassen, sondern eine Impulssteuerung zu verwenden. Man kann also dadurch das Leuchtmittel beispielsweise aufblinken lassen, wodurch man eine Signalwirkung erzeugt und den Erkennungseffekt weiter verbessert. Solche impulsgesteuerte farbige Beleuchtung kann man beispielsweise auch bei Parkleitsystemen einsetzen, um diese besser erkennbar zu machen und den Leiteffekt zu verbessern. Solche Parkleitsysteme und andere Schilder und Informationsträger werden im Sinne der vorliegenden Erfindung ebenfalls zu den urbanen Möbeln gerechnet.

Nachfolgend wird die vorliegende Erfindung anhand eines Ausführungsbeispiels unter Bezugnahme auf die beiliegenden Zeichnungen näher beschrieben. Dabei zeigen
- Fig. 1: eine Ansicht eines beispielhaften Fensterelements für ein urbanes Möbel gemäß der Erfindung;
- Fig. 2: eine vergrößerte Detailansicht des Fensterelements im Schnitt entlang der Linie II-II von Fig. 1;
- Fig. 3: eine perspektivische Ansicht eines Wartehäuschens mit Fensterelementen gemäß der Erfindung.

Zunächst wird auf Fig. 3 Bezug genommen. Die Darstellung zeigt in perspektivischer Ansicht ein beispielhaftes Wartehäuschen für z. B. eine Bushaltestelle oder Straßenbahnhaltestelle, welches insgesamt mit 10 bezeichnet ist. Das Wartehäuschen 10 besteht im Prinzip aus einer transparenten Konstruktion umfassend eine Reihe von Fensterelementen 100 mit Rahmen 113 gemäß der Erfindung. Aus diesen Fensterelementen 100 können beispielsweise die Seitenwände 11, 12 des Wartehäuschens und auch die Rückwand 13 bestehen. Das Dach 14 des Wartehäuschens 10 besteht in dem Ausführungsbeispiel gemäß Fig. 3 aus einem anderen Material, was aus statischen Gründen und/oder aus Gründen der erhöhten Bruchsicherheit angebracht sein kann.

Wie man weiterhin erkennt, umfasst jede der beiden Seitenwände 11, 12 eines solchen Wartehäuschens 10 jeweils wenigstens eines der Fensterelemente 100, wobei beispielsweise je nach Abmessungen der Seitenwände und der Fensterelemente auch z. B. zwei solcher Fensterelemente 100 mit ihren Rahmenkonstruktionen übereinander angeordnet sein können und jeweils eine Seitenwand 11, 12 des Wartehäuschens 10 bilden. Die Rückwand 13 kann z. B. aus vier solcher Fensterelemente 100 oder auch nur aus zwei solcher Fensterelemente bestehen, je nach Größe der Fensterelemente, die zur Vereinfachung standardisierte Abmessungen aufweisen können.

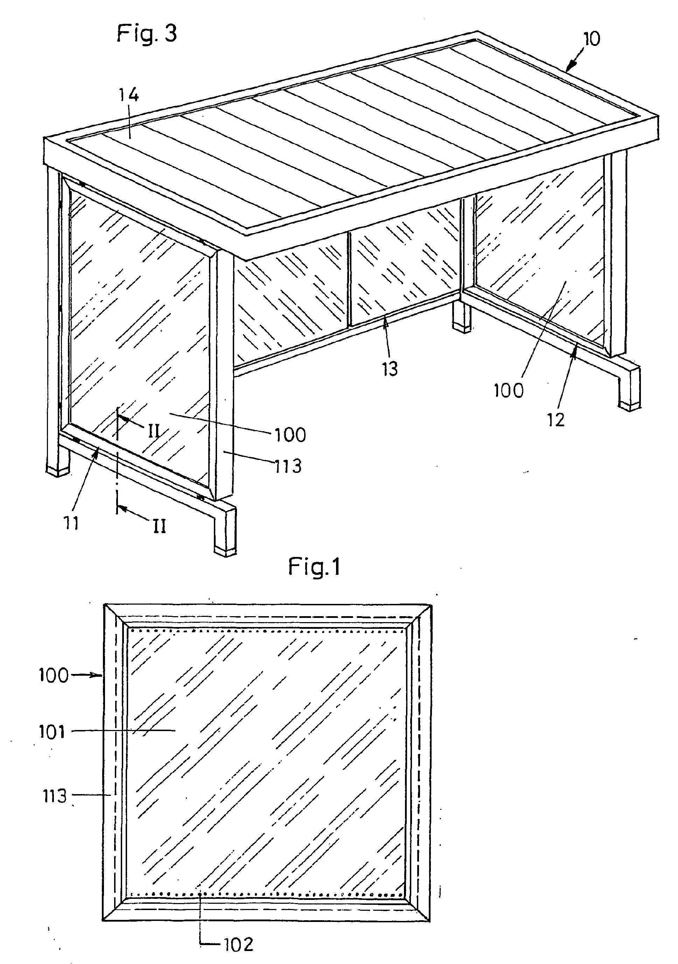

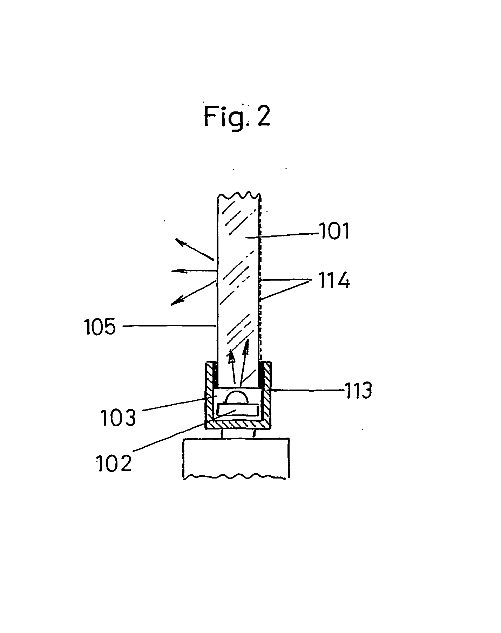

Figur 1 zeigt eine Ansicht eines solchen Fensterelements 100, wie es erfindungsgemäß verwendet wird zur Konstruktion von urbanen Möbeln, z. B. Wartehäuschen gemäß der Darstellung des Ausführungsbeispiels von Figur 3. Das Fensterelement 100 umfasst im Prinzip eine Rahmenkonstruktion 113, beispielsweise einen Metallrahmen, der eine einfache Glasscheibe 101 oder eine Verbundglasscheibe einfasst. Weiterhin sind Leuchtmittel 102 vorhanden, beispielsweise LED's jeglicher Bauart, andere Leuchtdioden oder ähnliche energiesparende Leuchtmittel, die in einer reihenförmigen Anordnung in dem stirnseitigen Bereich vor der Glasplatte 101 angeordnet sind und zwar in dem Bereich, der zum Rahmen 113 hin gewandt ist, so dass man in der Regel bei einer Betrachtung in Richtung der Flächennormalen auf das Fensterelement wie sie der Darstellung gemäß Figur 1 entspricht, die Leuchtmittel 102 nicht sieht, da sie durch die Rahmenkonstruktion 113 abgedeckt werden. Nähere Einzelheiten ergeben sich aus der Teildarstellung gemäß dem Längsschnitt von Figur 2, auf die nachfolgend Bezug genommen wird.

Man kann als Rahmenkonstruktion 113 im Prinzip ein U-förmiges Rahmenprofil verwenden, welches die Glasscheibe 101, die auch eine Kunststoffglasscheibe oder eine Verbundglasscheibe sein kann, stirnseitig einfasst. Als Leuchtmittel, die stirnseitig das Licht in die Glasscheibe 101 einstrahlen, werden eine Reihe von Leuchtdioden 102 verwendet, beispielsweise LED's, die in eine Platine 103 aus einem transparenten Material eingegossen sein können. Dadurch werden die LED's 102 gegen Witterungseinflüsse und mechanische Einflüsse geschützt. Das Licht wird in die Glasplatte 101 eingestrahlt und in dieser geleitet. Dadurch, dass die Glasplatte beispielsweise einseitig eine Bedruckung oder Beschichtung beispielsweise in einem Punktraster 114 aufweist, oder entsprechend geätzt oder beklebt ist oder auch im Inneren eine Fehlstruktur aufweist, wird eine Lichtstreuung und Lichtumlenkung erzielt, so dass das Licht über die Fläche 105 der Glasplatte 101 flächig als Streulicht abgegeben wird. Die Lichtabstrahlrichtung ist also im wesentlichen senkrecht zu der Lichteinstrahlrichtung der stirnseitig angeordneten Leuchtmittel 102. Bei Verwendung von Fensterelementen 100 mit einfachen Glasscheiben wie sie in dem Ausführungsbeispiel nach Figur 2 dargestellt sind, kann man ein Wartehäuschen der in Figur 3 gezeigten Art insgesamt in sich quasi selbstleuchtend ausbilden, ohne dass der Betrachter diskrete Leuchtmittel wahrnimmt, da diese durch die Rahmenkonstruktion 113 abgedeckt sind. Damit erzeugt man eine ganz andere optische Wirkung als bei Verwendung einzelner Leuchtstoffröhren nach der herkömmlichen Technik, die beispielsweise im Innenraum eines Wartehäuschens angeordnet sind, um diesen zu beleuchten. Durch solche Leuchtmittel erhält man immer nur eine Ausleuchtung bestimmter Bereiche und die Blendwirkung bei Sicht auf das Leuchtmittel lässt sich in der Regel nicht ganz ausschalten. Auch bei der Verwendung von Leuchtmitteln, die sich hinter einer Glasscheibe, beispielsweise einer farbigen oder einer Milchglasscheibe befinden, wie bei hinterleuchteten Vitrinen, erhält man keine gleichmäßige flächige Ausleuchtung der Glasplatte. Anstelle des in den den Figuren 1 und 2 dargestellten Ausführungsbeispiels kann man auch Wartehäuschen oder andere urbane Möbel aus Verbundglasplatten nach dem erfindungsgemäßen Prinzip konstruieren. In diesem Fall verwendet man mehrere plattenförmige Elemente, die im Verbund aneinander liegen und es genügt beispielsweise, wenn man das Licht stirnseitig über Leuchtmittel in nur eines der plattenförmigen Elemente der Verbundplatte einstrahlt. Es ist aber auch möglich, Licht über verschiedene Leuchtmittelgruppen gleichzeitig bzw. unabhängig voneinander in mehrere plattenförmige Elemente einer solchen Verbundplatte stirnseitig einzustrahlen. In diesem Fall könnte man das Licht, welches in das eine oder andere plattenförmige Element einstrahlt, durch entsprechende Steuereinrichtungen in unterschiedlichen Farben oder unterschiedlichen Helligkeitsgraden abstrahlen. Beispielsweise besteht die Möglichkeit, bei Verwendung derartiger Verbundplatten Licht einmal in den Innenraum eines Wartehäuschens als weißes Licht zu Beleuchtungszwecken abzustrahlen und darüber hinaus über äußere plattenförmige Elemente solcher Verbundplatten einzelne Fensterelemente eines solchen Wartehäuschens flächig oder in Teilflächen farbig beleuchtet zu gestalten. Die Verbindung solcher plattenförmiger Elemente zu Verbundplatten kann nach ähnlichen Methoden wie bei herkömmlichen Verbundgläsern erfolgen. Man kann in diesen Fällen auch ein Verbundglas verwenden, bei dem einzelne plattenförmige Elemente aus verschiedenen Glassorten bestehen, beispielsweise aus Weißglas oder farbigem Glas oder Floatglas. Außerdem kann man solche Verbundglasplatten zusätzlich mit Solarelementen ausstatten, die z. B. zwischen zwei plattenförmigen Elementen einer Verbundglasplatte angeordnet oder auf eine der Glasplatten aufgeklebt sein können, so dass sich eine sandwichartige Anordnung ergibt. Über solche Solarzellenelemente kann man das Tageslicht dazu nutzen, Energie zu speichern, um diese dann bei Dunkelheit zur Speisung der Leuchtmittel zu verwenden. Auf diese Weise kann man das urbane Möbel von einer externen Energieversorgung unabhängig machen.

## Patentansprüche

1. Urbanes Möbel umfassend wenigstens ein Fensterelement mit einer Rahmenkonstruktion, die wenigstens eine Glasscheibe einfasst, sowie eine Beleuchtungseinrichtung mit wenigstens einem Leuchtmittel, wobei das Leuchtmittel Licht stirnseitig von der Rahmenkonstruktion in wenigstens eine Glasscheibe einstrahlt, wobei dieses Licht wenigstens teilweise etwa senkrecht zu der Einstrahlrichtung abgelenkt wird, so dass es über die Fläche der Glasscheibe des Fensterelements zur einen und/oder anderen Seite hin abgegeben wird und als Leuchtmittel (102) eine Anzahl stirnseitig an der Rahmenkonstruktion angeordneter Leuchtmittel mit niedrigem Energieverbrauch vorgesehen ist,
**dadurch gekennzeichnet dass** wenigstens eine der Glasscheiben (101) lichtstreuend wirkt und dazu wenigstens einseitig bedruckt, gesandstrahlt, geätzt, beschichtet, graviert oder beklebt ist oder in ihrem Inneren eine Fehlstruktur aufweist
und dass als Leuchtmittel (102) wenigstens teilweise LED's, LED-SMD's, andere Leuchtdioden oder dergleichen verwendet werden,
und dass Steuereinrichtungen vorgesehen sind, um wenigstens teilweise Leuchtmittel derart zu steuern, dass diese weißes Licht oder Licht einer gewünschten Farbe abgeben.

2. Urbanes Möbel nach Anspruch 1, **dadurch gekennzeichnet, dass** wenigstens eine der Glasscheiben wenigstens eines Fensterelements (100) wenigstens einseitig in einem Punktraster (114), Strichraster oder ähnlichem Raster bedruckt ist.

3. Urbanes Möbel nach einem der Ansprüche 1 bis 2, **dadurch gekennzeichnet, dass** die Fläche wenigstens einer der Glasscheiben wenigstens eines Fensterelements wenigstens einseitig ein durch Sandstrahlen, Ätzen, Beschichten, Gravieren oder Bekleben mit Partikeln erzeugtes Punktraster, Strichraster oder sonstiges Raster zur Lichtstreuung aufweist.

4. Urbanes Möbel nach einem der Ansprüche 1 bis 3, **dadurch gekennzeichnet, dass** als Leuchtmittel (102) eine auf einer streifenförmigen Anordnung angebrachte Anzahl LED's oder SMD's vorgesehen ist, wobei der Streifen stirnseitig in eine Nut der Rahmenkonstruktion eingelassen ist.

5. Urbanes Möbel nach einem der Ansprüche 1 bis 4, **dadurch gekennzeichnet, dass** wenigstens zwei Glasscheiben (101, 111) vorgesehen sind, die ein Verbundglas bilden.

6. Urbanes Möbel nach einem der Ansprüche 1 bis 5, **dadurch gekennzeichnet, dass** wenigstens eines der Fensterelemente (100) bzw. wenigstens eine der Glasscheiben (101, 111) beidseitig lichtstreuend ausgebildet ist.

7. Urbanes Möbel nach einem der Ansprüche 1 bis 6, **dadurch gekennzeichnet, dass** die Leuchtmittel (102) auf im stirnseitigen Bereich wenigstens einer Glasscheibe (101, 111) angebrachten Platinen angeordnet sind.

8. Urbanes Möbel nach einem der Ansprüche 1 bis 7, **dadurch gekennzeichnet, dass** die Leuchtmittel in Leisten oder Blöcke aus einem im wesentlichen durchsichtigen lichtdurchlässigen Material, vorzugsweise Kunststoff eingegossen sind.

9. Urbanes Möbel nach einem der Ansprüche 1 bis 8, **dadurch gekennzeichnet, dass** verschiedene Leuchtmittel (102) mittels Steuereinrichtungen so ansteuerbar sind, dass die Leuchtmittel Licht unterschiedlicher Farbe abgeben.

10. Urbanes Möbel nach einem der Ansprüche 1 bis 9, **dadurch gekennzeichnet, dass** Steuereinrichtungen und/oder Sensoren vorgesehen sind, die eine Steuerung der Leuchtmittel (102) in Abhängigkeit vom einfallenden Tageslicht, abhängig von einer in der Nähe des urbanen Möbels anwesenden Person und/oder nach einem beliebigen vorgegebenen Programm bewirken.

11. Urbanes Möbel nach einem der Ansprüche 1 bis 10, **dadurch gekennzeichnet, dass** wenigstens ein Sensor in Form einer Fotozelle und/oder eines Bewegungsmelders vorgesehen ist.

12. Urbanes Möbel nach einem der Ansprüche 1 bis 11, **dadurch gekennzeichnet, dass** wenigstens eine der zuvor genannten Glasscheiben (101, 111) aus Echtglas oder aus Kunststoffglas besteht.

13. Urbanes Möbel nach einem der Ansprüche 1 bis 12, **dadurch gekennzeichnet, dass** dieses ein Wartehäuschen (10) ist.

14. Urbanes Möbel nach Anspruch 13, **dadurch gekennzeichnet, dass** dieses ein Wartehäuschen (10) für eine Bus- oder Straßenbahnhaltestelle ist.

15. Urbanes Möbel nach einem der Ansprüche 1 bis 13, **dadurch gekennzeichnet, dass** dieses ein Eingangsbereich zu einem U-Bahn oder S-Bahn-Schacht ist.

16. Urbanes Möbel nach einem der Ansprüche 1 bis 13, **dadurch gekennzeichnet, dass** dieses eine Sitzbank ist.

17. Urbanes Möbel nach einem der Ansprüche 1 bis 13, **dadurch gekennzeichnet, dass** dieses ein Schild oder ein ähnlicher Informationsträger im Außenbereich ist.

18. Urbanes Möbel nach einem der Ansprüche 1 bis 17, **dadurch gekennzeichnet, dass** Steuereinrichtungen für eine farbige Ansteuerung der Leuchtmittel (102) vorgesehen sind, derart, dass die entsprechende Farbe einem Erkennungszweck dient.

19. Urbanes Möbel nach Anspruch 18, **dadurch gekennzeichnet, dass** Steuereinrichtungen vorgesehen sind, mittels derer die Leuchtmittel (102) impulssteuerbar sind.

## Claims

1. Public outdoor furnishings comprising at least one window element with a frame structure, that includes at least one glass pane, in addition to an illumination device with at least one illumination element, the illumination element irradiating light from the front face of the frame structure into at least one glass pane, said light being at least being partially deflected in a direction approximately perpendicular to that of the irradiation, in such a way that it is transferred over the surface of the glass pane towards one side/and or the other, and as illumination elements (102)a number of illumination units with low energy consumption is provided,
**characterised in that** at least one of the glass panes (101) diffuses the light and for this purpose is printed, sandblasted, etched, coated, engraved or pasted on at least one side, or the interior of said glass pane has a flawed structure, and as illumination elements (102) at least partly LED, LED-SMD or other light emitting diodes or the like are used,
and **in that** control devices are provided to at least partly control the illumination elements, in such a way, that they emit white light or light of a desired colour.

2. Public outdoor furnishings according to claim 1, **characterised in that** at least one of the glass panes of at least one window element (100) is printed on at least one side with a dot screen (114), line screen or a similar screen.

3. Public outdoor furnishings according to claim 1 or 2, **characterised in that** the surface of at least one of the glass panes of at least one window element comprises on at least one side a dot screen, line screen or an other type of screen for light diffusion, having been produced by sand blasting, etching, coating, engraving or bonding particles to the surface.

4. Public outdoor furnishings according to one of claims 1 to 3, **characterised in that** as illumination elements (102) a number of LED or SMD mounted to a device with a structure of a stripe is provided, the stripe being engaged into the front side of a groove of the frame structure.

5. Public outdoor furnishings according to one of claims 1 to 4, **characterised in that** at least two glass panes (101,111) are provided, forming a joint glass structure.

6. Public outdoor furnishings according one of claims 1 to 5, **characterised in that** at least one
of the window elements (100) or at least one of the glass panes (101, 111) is being light diffusing on both sides.

7. Public outdoor furnishings according to one of claims 1 to 6, **characterised in that** the illumination elements (102) are arranged on plates mounted onto the front side of at least one glass pane (101, 111).

8. Public outdoor furnishings according to one of claims 1 to 7, **characterised in that** the illumination elements are cast into strips or blocks consisting of an essentially transparent light transmitting material, preferably plastic.

9. Public outdoor furnishings according to one of claims 1 to 8, **characterised in that** different illumination elements (102) can be controlled by control devices, in order to have the illumination elements to emit light of different colours.

10. Public outdoor furnishings according to one of claims 1 to 9, **characterised in that** control devices and/or sensors are provided, effecting a control of the illumination elements (102) in dependence of daylight falling in, depending on the presence of a person near the outdoor furnishings and/or following any predetermined program.

11. Public outdoor furnishings according to one of claims 1 to 10, **characterised in that** at least one sensor of the kind of a photo cell and/or a motion sensor is provided.

12. Public outdoor furnishings according to one of claims 1 to 11, **characterised in that** at least one of said glass panes (101, 111) is constituted of genuine glass or plastic glass.

13. Public outdoor furnishings according to one of claims 1 to 12, **characterised in that** it is a shelter house (10).

14. Public outdoor furnishings according to claim 13, **characterised in that** it is a shelter house (10) for a bus stop or a tram stop.

15. Public outdoor furnishings according to one of claims 1 to 13, **characterised in that** it is an entrance to an underground or a railway station.

16. Public outdoor furnishings according to one of claims 1 to 13, **characterised in that** it is a bench.

17. Public outdoor furnishings according to one of claims 1 to 13, **characterised in that** it is a sign-board or a similar outdoor information carrier.

18. Public outdoor furnishings according to one of claims 1 to 17, **characterised in that** control devices for a colour control of the illumination elements are provided, in such a manner, that the respective colour serves for a recognition purpose.

19. Public outdoor furnishings according to claim 18, **characterised in that** control devices are provided, by means of which the illumination elements (102) are impulse controlled.

## Revendications

1. Meuble urbain comprenant au moins un élément de fenêtre avec une structure de cadre, comportant au moins une vitre aussi qu'un dispositif d'éclairage avec au moins une source lumineuse, la source lumineuse irradiant de la lumière du côté de front de la structure de cadre dans l'intérieur d'au moins une vitre, ladite lumière étant réfléchi au moins en partie en direction perpendiculaire de la direction d'irradiation, afin qu'il soit distribuée parmi le surface de la vitre de l'élément de fenêtre sur l'un ou sur l'autre côté, comme source lumineuse (102) étant prévue un nombre d'unités lumineuses avec consommation basse d'énergie, disposés frontal sur la structure de cadre,
**caractérisé en ce qu'**au moins une des vitres (101) diffuse la lumière et à ces fins est imprimée, sablée, attaquée, couverte, gravée ou collée, ou comporte une structure de défaut à son intérieur, et comme source lumineuse (102) sont utilisés des LED, LED-SMD, d'autres diodes lumineuses ou pareilles,
et **en ce que** des dispositifs de contrôle sont prévues, afin de contrôler les sources lumineuses au moins en partie d'une telle manière, qu'elles irradient de la lumière blanche ou d'une couleur souhaitée.

2. Meuble urbain selon la revendication 1, **caractérisé en ce qu'**au moins l'une des vitres d'au moins l'un des éléments de fenêtre (100) est imprimée au moins sur l'un de ses côtés en image tramée de points, de barres ou en trame pareille.

3. Meuble urbain selon l'une des revendications 1 ou 2, **caractérisé en ce que** la surface d'au moins l'une des vitres d'au moins l'un des éléments de fenêtre comporte au moins sur l'un de ses côtés une trame de points, de barres ou autre trame afin de diffuser la lumière, produit par sablage, attaque, couverture, gravure ou collage avec des particules.

4. Meuble urbain selon l'une quelconque des revendications 1 à 3, **caractérisé en ce qu'**un nombre de LED ou SMD, monté sur un dispositif en bande, est prévu comme source lumineuse (102), la bande étant serti en frontal dans une rainure de la structure de cadre.

5. Meuble urbain selon l'une quelconque des revendications 1 à 4, **caractérisé en ce qu'**au moins deux vitres (101,111), constituant du verre feuilleté, sont prévues.

6. Meuble urbain selon l'une quelconque des revendications 1 à 5, **caractérisé en ce qu'**au moins l'un des éléments de fenêtre (100) respectivement au moins l'une des vitres (101,111) diffuse de la lumière sur les deux côtés.

7. Meuble urbain selon l'une quelconque des revendications 1 à 6, **caractérisé en ce que** les sources lumineuses sont disposées sur des platines montées en région frontale d'au moins l'une des vitres.

8. Meuble urbain selon l'une quelconque des revendications 1 à 7, **caractérisé en ce que** les sources lumineuses sont moulées dans des baguettes ou des blocs, constitués d'un matériau transparent et translucide, de préférence du plastique.

9. Meuble urbain selon l'une quelconque des revendications 1 à 8, **caractérisé en ce que** différentes sources lumineuses sont prévues, propre à être contrôlées à moyen de dispositifs de contrôle, d'une telle manière, que les sources lumineuses irradient de la lumière de couleurs différentes.

10. Meuble urbain selon l'une quelconque des revendications 1 à 9, **caractérisé en ce que** des dispositifs de contrôle ou des senseurs sont prévus, effectuant le contrôle des sources lumineuses (102), dépendant de la lumière du jour, dépendant de la présence d'une personne s'approchant du meuble urbain, et/ou selon un programme quelconque donné.

11. Meuble urbain selon l'une quelconque des revendications 1 à 10, **caractérisé en ce qu'**au moins un capteur du type cellule photo et/ou capteur de mouvement est prévu.

12. Meuble urbain selon l'une quelconque des revendications 1 à 11, **caractérisé en ce qu'**au moins une desdites vitres (101,111) est constituée de vraie verre ou de verre en plastique.

13. Meuble urbain selon l'une quelconque des revendications 1 à 12, **caractérisé en ce que** ledit meuble urbain est un abri (10).

14. Meuble urbain selon la revendication 13, **caractérisé en ce que** ledit meuble urbain est un abribus (10) ou un abri de tram.

15. Meuble urbain selon l'une quelconque des revendications 1 à 13, **caractérisé en ce que** ledit meuble urbain est une région d'entrée d'un tunnel de métro ou de chemin de fer urbain.

16. Meuble urbain selon l'une quelconque des revendications 1 à 13, **caractérisé en ce que** ledit meuble est un banc.

17. Meuble urbain selon l'une quelconque des revendications 1 à 13, **caractérisé en ce que** ledit meuble urbain est un panneau ou un pareil porteur d'information à l'extérieur.

18. Meuble urbain selon l'une quelconque des revendications 1 à 17, **caractérisé en ce que** des dispositifs de contrôle sont prévus pour contrôler les sources lumineuses (102), d'une telle manière qu'il irradient de la lumière en couleur, qui sert à des fins de reconnaissance.

19. Meuble urbain selon la revendication 18, **caractérisé en ce que** des dispositifs de contrôle sont prévus, au moyen desquels les sources lumineuses (102) peuvent être contrôlés à impulsion.
